(19) Europäisches Patentamt
European Patent Office
Office européen des brevets

(11) Publication number : **0 493 043 A2**

# (12) EUROPEAN PATENT APPLICATION

(21) Application number : **91311905.3**

(51) Int. Cl.$^5$ : **G02F 1/15**

(22) Date of filing : **20.12.91**

(30) Priority : **20.12.90 GB 9027608**

(43) Date of publication of application : **01.07.92 Bulletin 92/27**

(84) Designated Contracting States : **AT BE CH DE DK ES FR GB GR IT LI LU NL SE**

(71) Applicant : **OXFORD POLYTECHNIC
Gipsy Lane
Headington, Oxford OX3 OBP (GB)**

(72) Inventor : **Hutchins, Michael G., c/o Oxford Polytechnic
School of Engineering, Gipsy Lane
Headington, Oxford 0X3 0BP (GB)**
Inventor : **McMeeking, Graham, c/o Oxford Polytechnic
School of Engineering, Gipsy Lane
Headington, Oxford 0X3 0BP (GB)**

(74) Representative : **Pennant, Pyers et al
Stevens, Hewlett & Perkins 1 Serjeants' Inn
Fleet Street
London EC4Y 1LL (GB)**

## (54) Making electrochromic films.

(57) A method of forming an electrochromic film comprises contacting a preferably transparent and electrically conducting substrate with an alkaline aqueous solution comprising transition metal ions and a stabiliser. The alkali is preferably ammonium hydroxide. The transition metal ions are preferably nickel. The solution preferably contains 10 to 30% by weight of a non-ionic surface active agent such as polyoxyethylene sorbitan monolaurate as the stabiliser.

EP 0 493 043 A2

Jouve, 18, rue Saint-Denis, 75001 PARIS

Electrochromism is defined as reversible optical switching of a material to a coloured, bleached or intermediate state as a result of dual ion and electron insertion/removal under a low applied voltage. As a result of this injection/ejection, colour centres are formed in the material, producing optical absorption principally in the visible wavelength region, although near infra-red absorption is possible. These changes in optical density, between the coloured and bleached states, represent both chemical and structural changes in the material.

Electrochromic materials have shown great promise for future window and information display applications. These reversible optically switching materials offer dynamic control of solar radiation with long memory times. An important property of electrochromic materials for window displays is the ability to control illumination levels as well as glare and heat gain or loss. These features are particularly desirable for large-scale architectural glazing. Other glazing applications arise in the vehicle and aerospace fields. Electrochromic materials can be used for rewritable holograms. Because the bleached/coloured change involves oxidation/reduction, the material can also be used to detect processes involving oxidation or reduction, e.g. in smoke detectors or biosensors.

The most widely studied electrochromic material is tungsten oxide, which exhibits a transparent to blue colouration. However, there are other materials based on transition metal oxides, such as hydrated nickel oxide, that demonstrate much promise.

The subject is covered in a book entitled "Large Area Chromogenics: Materials and Devices for Transmittance Control" by C. M Lampert and C. G. Granqvist, Optical Engineering Press, Bellingham, WA, 1989. The chapter by C. M. Lampert entitled "Chemical and Optical Studies of Electrochromic Hydrated Nickel Oxide Films and Devices" is of particular interest.

Nickel oxide films can be produced by a variety of processes. The fabrication processes are physical vapour deposition, electrochemical deposition and chemical deposition. The types of physical deposition reported are electron beam evaporation (1), d.c. magnetron sputtering (2), r.f. magnetron sputtering (3) and r.f. sputtering (4). Two types of electrochemical deposition have been reported, anodic (5) and cathodic (6). Finally, chemical deposition involves the alternate immersion of a conductive substrate into nickel sulphate and sodium hydroxide (7). A variation to this method is immersing a conductive substrate into one solution containing nickel sulphate and sodium hydroxide (8).

There is controversy about the colouration mechanism in hydrated nickel oxide films. This is due to the facts that different methods of fabrication ultimately produce different basic structures and film densities, and that the films can be crystalline, amorphous or mixed.

Most of the nickel oxide films that are deposited by physical vapour deposition have to be cycled in aqueous potassium hydroxide in order to observe electrochromism. This may lead to the nickel oxide being partly converted to nickel hydroxide. The overall reaction can be written:

$$\underset{\text{(bleached)}}{Ni(OH)_2 + OH^-} \rightleftharpoons \underset{\text{(coloured)}}{NiOOH + e^- + H_2O}$$

The precise chemical state of the film is not material to the present invention. For convenience and brevity, the term nickel hydroxide film is used herein.

When ammonium hydroxide is added to nickel sulphate solution, the mixture turns blue, with a colloid nickel hydroxide forming virtually simultaneously. Shortly afterwards, large white flakes of nickel hydroxide start to precipitate out from the colloid. Smaller flakes of nickel hydroxide can also be seen forming on all surfaces in contact with the mixture. The mixture has a useful life of less than 2 hours, which is inconveniently short for many purposes. The present invention is based on the discovery that the useful lifetime of the mixture can be greatly increased by the addition of a non-ionic surface active agent.

Films formed by anodic or cathodic deposition tend to be non-uniform when the current density is not uniform. It would in any event be more convenient not to have to use electric current. Films formed by simple chemical deposition in the absence of applied electric current appear to be different in some way, presently not understood, from those formed by anodic or cathodic deposition. But chemically deposited films may have variable properties and variable adhesion to the substrate. It is an object of this invention to overcome these problems and to provide films which have excellent adhesion to the substrate and which can be bleached to a highly transparent state.

The invention provides a method of forming an electrochromic film on a substrate, which method comprises contacting the substrate with an alkaline aqueous solution comprising transition metal ions and a stabiliser.

The transition metal ions are preferably nickel, although other transition metals are possible including cobalt, manganese, chromium and tungsten. The properties of the films may be improved in known manner by doping the main transition metal ion component with ions of another metal such as lithium. The transition metal

ion concentration is generally from 0.001M to 1.0M, preferably from 0.01M to 0.1M. Within these limits, lower metal concentrations tend to give films that are sensitive only to visible light, while higher metal concentrations tend to give films that are sensitive also to infra-red radiation. If the concentration is too high, then the deposited film may have reduced or non-existent electrochromic properties. If the concentration is too low, then the contact time required to achieve a film of useful thickness may be unacceptably long.

The aqueous solution contains alkali, generally at a molar concentration from 0.1 to 100, preferably from 1 to 10, times the molar concentration of the transition metal ions. If the alkali concentration is too high in relation to the metal ion concentration, then the plating rate is reduced. The alkali is one which gives rise to a colloidal solution rather than an immediate gross precipitate. Amines, and particularly ammonium hydroxide are preferred.

The solution includes a stabiliser whose function is to delay or even prevent precipitation of the transition metal. Preferred stabilisers are non-ionic surface active agents. When the alkali is ammonia or an amine, then a caustic alkali such as sodium or potassium hydroxide may be used in partial or even complete replacement of the non-ionic surfactant. A surfactant may act by stabilising a colloidal solution of the transition metal hydroxide. A caustic alkali may act by stabilising a soluble transition metal/amine complex.

The aqueous solution contains a non-ionic surface active agent, generally at a concentration of 1 to 40%, particularly 5 to 30%, by weight. These preferred concentrations are much higher than usual surfactant concentrations. Any non-ionic surface active agent can be used that is soluble in the alkaline aqueous solution but preferred are those which have no strong affinity for the transition metal and whose aliphatic chain length is relatively short. One preferred agent is a polyethylene glycol reduced monosaccharide, for example polyoxyethylene sorbitan monolaurate, used at a concentration of 2.5-40% by weight. Another preferred agent is that sold under the Trade Name Decon 90 by Decon Ltd. preferably at a concentration of 5-20%. Decon 90 is a proprietary mixture of non-ionic and anionic surface active agents and stabilisers in an alkaline medium. Enough surfactant should be used to give the colloidal solution an acceptable lifetime. It is probably not desirable to use so much surface active agent that the colloidal solution is indefinitely stable.

The addition of the polyoxyethylene sorbitan monolaurate (PSL) to solutions that are used for electrodeposition vastly improves the uniformity of nickel hydroxide electrochromic films. The deposition rate may be slightly lower than the equivalent non-stabilised solutions, but can be increased by the addition of extra ammonium hydroxide to the solution. The use of Decon 90 has been investigated as an alternative detergent to PSL for electroplating, with encouraging results. Deposition rates are higher than those achieved with PSL.

It may be useful to include an oxidising agent which is soluble in the aqueous alkaline solution. For example, potassium permanganate has been found to give rise to electrochromic nickel hydroxide films which colour to grey or black rather than bronze or brown.

The transition metal salt used to make up the solution is not critical. Nickel sulphate is preferred as giving rise to a stable colloidal solution. The transition metal salt is preferably mixed first with the surface active agent, and the alkali then added to the resulting mixture. This procedure avoids premature nickel hydroxide precipitation.

The resulting colloidal solutions have useful lifetimes of days or weeks. They may be used at ambient temperature, or alternatively at lower temperatures in order to increase their lifetimes.

The nature of the substrate, on which the electrochromic film is to be formed, is not critical. Films have been formed on non-conducting substrates, but the crystallite sizes tend to be relatively large. Films formed on electrically conducting substrates have been shown to have an average crystal size of the order of 2 to 5 nm, with individual crystallites up to 25 nm. The method of the invention is expected to be particularly useful with electrically conducting substrates, particularly those which are transparent. For example, fluorine doped tin oxide coated glass substrates have been used with success. Electrochromic film thickness is a function of contact time, and times from 10 seconds up to 6 hours preferably 15-120 minutes are feasible. Contact is preferably effected by dipping the substrate in the solution, but spraying and roller coating are possible alternatives. Although not necessary and not preferred, it is possible to apply a voltage to an electrically conducted substrate, by making the substrate either anodic or cathodic or cycling the substrate between the two. Application of an anodising voltage accelerates deposition. Films produced by simple colloidal precipitation by dipping may be found to be mechanically and electrochemically more durable than anodically deposited films.

The deposited films are washed e.g. with distilled water, and dried e.g. with air or nitrogen. Since they bleach in air, the films are generally stored in the absence of air. No heat curing is required. The films are found to be mechanically durable, and typically pass the British Standard Adhesive Tape Test.

Reference is directed to the accompanying drawing in which each of Figures 1 to 5 is a plot of Transmittance against Wavelength of an electrochromic film from a correspondingly numbered Example.

Example 1. Simple Dipping

A solution containing 0.025 moles of nickel sulphate in 50 $cm^3$ of distilled water was prepared. To this was added 33 $cm^3$ of 0.79 molar ammonium hydroxide (aqueous). The mixture was stirred as the ammonium hydroxide was added. Solution ageing time was measured from the moment of the addition of the first drop of ammonium hydroxide. A solution containing 2.5% (by mass of the total distilled water mass) of polyoxyethylene sorbitan monolaurate was prepared in 167 $cm^3$ of distilled water. The solution was stirred. The addition of the detergent solution occurred 3 minutes after the first drop of ammonium hydroxide was added to the nickel sulphate solution. The solution was stirred for a further two minutes.

An indium tin oxide coated glass substrate of sheet resistance 40 ohms per square was cleaned in a 10% aqueous Decon solution using a sonicator for 10 minutes. The substrate was then washed using distilled water followed by drying in a nitrogen jet. This substrate was dipped in the solution, and held there for 30 minutes to effect deposition of a nickel hydroxide film. The conductive substrate was earthed during the deposition procedure so as to remove charge from the substrate as negatively charged colloidal particles deposited on the substrate. It was found that the deposition rates were enhanced by earthing the substrate, since an unearthed substrate would have acquired an increasing negative charge, repelling colloidal particles of nickel hydroxide hence reducing the deposition rate.

Post deposition treatment consisted of washing in distilled water followed by drying in a nitrogen jet. The nickel hydroxide film was then bleached and coloured electrochemically at -500 mV and +750 mV respectively for two minutes in both cases. The optical properties were measured for both the bleached and coloured states using a uv/vis/nir spectrophotometer.

Solution

Final solution volume, 250 $cm^3$, distilled water containing
0.0250 moles of nickel sulphate
0.0261 moles of ammonium hydroxide
2.5% (by mass of the total distilled water) polyoxyethylene sorbitan monolaurate.

Optical Properties for the Dipped Film (Plot 1)

| | Bleached film $Ni(OH)_2$ | Coloured Film $NiOOH$ |
|---|---|---|
| Solar transmittance (± 1%) | 80% | 30% |

Example 2

Mode of deposition: Electroplating

Solution ageing time before deposition commenced: 5 minutes

| | |
|---|---|
| Cycling rate of scanning potentiostat: | 20 mV/sec |
| Initial potential and final potential: | -500 mV to +1500 mV |
| Deposition time: | 60 minutes |

Solution

Final solution volume, 250 $cm^3$, distilled water containing

| | |
|---|---|
| Nickel sulphate | 0.0103 moles |
| Ammonium hydroxide | 0.0085 moles |
| Polyoxyethylene sorbitan monolaurate | 30% by mass of distilled water |

Solution Mixing Method

First of all nickel sulphate was dissolved in 50 $cm^3$ of distilled water this was followed by the addition of 75g of polyoxyethylene sorbitan monolaurate. The solution was stirred for five minutes. To this was then added a solution of 11.2 $cm^3$ of ammonium hydroxide (in this case the addition of 0.0085 moles) in 113.8 $cm^3$.

| Colouration potentials | | Solar transmittance (± 1%) |
|---|---|---|
| Colouration voltage: | + 750 mV | 66% |
| Bleaching voltage: | - 500 mV | 84% |

Both potentials were applied for 2 minutes.
See Fig. 2.

Example 3

Mode of Deposition: Electroplated

Solution ageing time before deposition commenced: 30 minutes

| | |
|---|---|
| Cycling rate of scanning potentiostat: | 20 mV/sec |
| Initial potential and final potential: | -500 mV to +1500 mV |
| Deposition time: | 120 minutes |

Solution

Final solution volume, 250 $cm^3$, distilled water containing

| | |
|---|---|
| Nickel sulphate | 0.0103 moles |
| Ammonium hydroxide | 0.0085 moles |
| Polyoxyethylene sorbitan monolaurate | 40% by mass of distilled water |

Solution Mixing Method

First of all nickel sulphate was dissolved in 50 $cm^3$ of distilled water this was followed by the addition of 100g of polyoxyethylene sorbitan monolaurate. The solution was stirred for five minutes. To this was then added a solution of 11.2 $cm^3$ of ammonium hydroxide (in this case the addition of 0.0085 moles) in 88.8 $cm^3$.

| Colouration potentials | | Solar transmittance (± 1%) |
|---|---|---|
| Colouration voltage: | + 750 mV | 68% |
| Bleaching voltage: | - 500 mV | 83% |

Both potentials were applied for 2 minutes.
See Fig. 3.

Example 4

Mode of Deposition: Electroplating

Solution ageing time before deposition commenced: 150 minutes

| | |
|---|---|
| Cycling rate of scanning potentiostat: | 20 mV/sec |
| Initial potential and final potential: | -500 mV to +1500 mV |
| Deposition time: | 120 minutes |

Solution

Final solution volume, 250 $cm^3$, distilled water containing

| | |
|---|---|
| Nickel sulphate | 0.0103 moles |
| Ammonium hydroxide | 0.0085 moles |
| Polyoxyethylene sorbitan monolaurate | 40% by mass of distilled water |

Solution Mixing Method

First of all nickel sulphate was dissolved in 50 $cm^3$ of distilled water this was followed by the addition of 100 g of polyoxyethylene sorbitan monolaurate. The solution was stirred for five minutes. To this was then added a solution of 11.2 $cm^3$ of ammonium hydroxide (in this case the addition of 0.0085 moles) in 113.8 $cm^3$.

| Colouration potentials | | Solar transmittance (± 1%) |
|---|---|---|
| Colouration voltage: | + 750 mV | 68% |
| Bleaching voltage: | - 500 mV | 83% |

Both potentials were applied for 2 minutes.
See Fig. 4.

Example 5

Mode of deposition: Electroplating

Solution ageing time before deposition commenced: 5 minutes

| | |
|---|---|
| Cycling rate of scanning potentiostat: | 20 mV/sec |
| Initial potential and final potential: | -500 mV to +1500 mV |
| Deposition time: | 30 minutes |

Solution

Final solution volume, 250 $cm^3$, distilled water containing

| | |
|---|---|
| Nickel sulphate | 0.025 moles |
| Ammonium hydroxide | 0.007 moles |
| Polyoxyethylene sorbitan monolaurate | 5% by mass of distilled water |

Solution Mixing Method

First of all nickel sulphate was dissolved in 50 $cm^3$ of distilled water this was followed by the addition of 12.5 g of polyoxyethylene sorbitan monolaurate. The solution was stirred for five minutes. To this was then added a solution of 9.0 $cm^3$ of ammonium hydroxide (in this case the addition of 0.007 moles) in 178.5 $cm^3$.

| Colouration potentials | | Solar transmittance (± 1%) |
|---|---|---|
| Colouration voltage: | + 500 mV | 54% |
| Bleaching voltage: | - 500 mV | 72% |

Both potentials were applied for 2 minutes.
See Fig. 5.

REFERENCES

1. N. R. Lynam, et al., Optical Materials Technology for Energy Efficiency and Solar Energy Conversion, SPIE VII, 1016, 63-75.
2. S. M. Babulanam, et al., Optical Materials Technology for Energy Efficiency and Solar Energy Conversion, SPIE VI, 823, 64-71.
3. J. S. E. M. Svensson, et al. (1987), Solar Energy Materials, 16, 19-26.
4. M. G. Hutchins, G. D. McMeeking and H. Xingfang, (1990) Rf Diode Sputtered Electrochromic Nickel Oxide Films. (reference?)
5. P. C. Yu, et al. (1986), Optical Materials Technology for Energy Efficiency and Solar Energy Conversion, SPIE V, 653, 16-24.
6. M. K. Carpenter, et al. (1987), Solar Energy Materials, 16, 33-346.
7. V. A. Macagno, et al. (1982), J. Electrochem Soc., 129, 2, 301-310.
8. M. E. Folquer, et al. (1980), J. Electrochem Soc., 127, 12, 2634-2640.

## Claims

1. A method of forming an electrochromic film on a substrate, which method comprises contacting the substrate with an alkaline aqueous solution comprising transition metal ions and a stabiliser.

2. A method as claimed in Claim 1, wherein the concentration of transition metal ions is from 0.01M to 0.1M.

3. A method as claimed in Claim 1 or Claim 2, wherein the transition metal is nickel.

4. A method as claimed in any one of Claims 1 to 3, wherein the solution contains alkali at a molar concentration from 1 to 10 times the molar concentration of transition metal ions.

5. A method as claimed in any one of Claims 1 to 4, wherein the alkali is ammonium hydroxide.

6. A method as claimed in any one of Claims 1 to 5, wherein the stabiliser is a non-ionic surface active agent.

7. A method as claimed in Claim 6, wherein the solution contains 10 to 30% by weight of the non-ionic surface active agent.

8. A method as claimed in Claim 6 or Claim 7, wherein the non-ionic surface active agent is a polyoxyethylene sorbitan monolaurate.

9. A method as claimed in Claim 6 or Claim 7, wherein the non-ionic surface active agent is that sold under the Trade Mark Decon 90.

10. A method as claimed in any one of Claims 1 to 9, wherein the substrate is transparent.

11. A method as claimed in any one of Claims 1 to 8, wherein the substrate is electrically conducting.

12. A method as claimed in Claim 11, wherein an electrochromic film is electrochemically deposited on the substrate.

Fig. 1

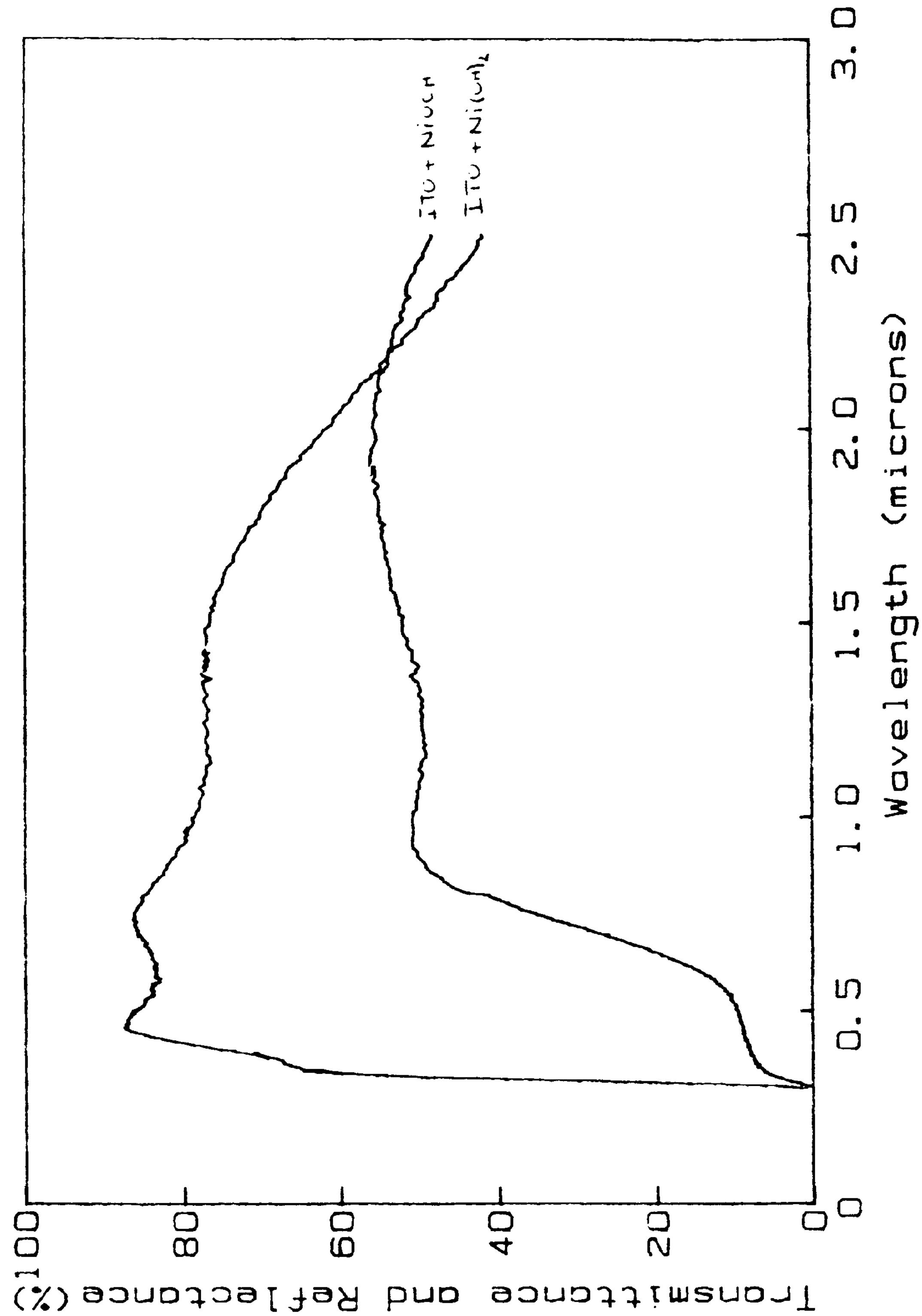
Transmittance and Reflectance (%)
100
80
60
40
20
0
0
0.5
1.0
1.5
2.0
2.5
3.0
Wavelength (microns)
ITO + NiOOH
ITO + Ni(OH)2

Fig. 2

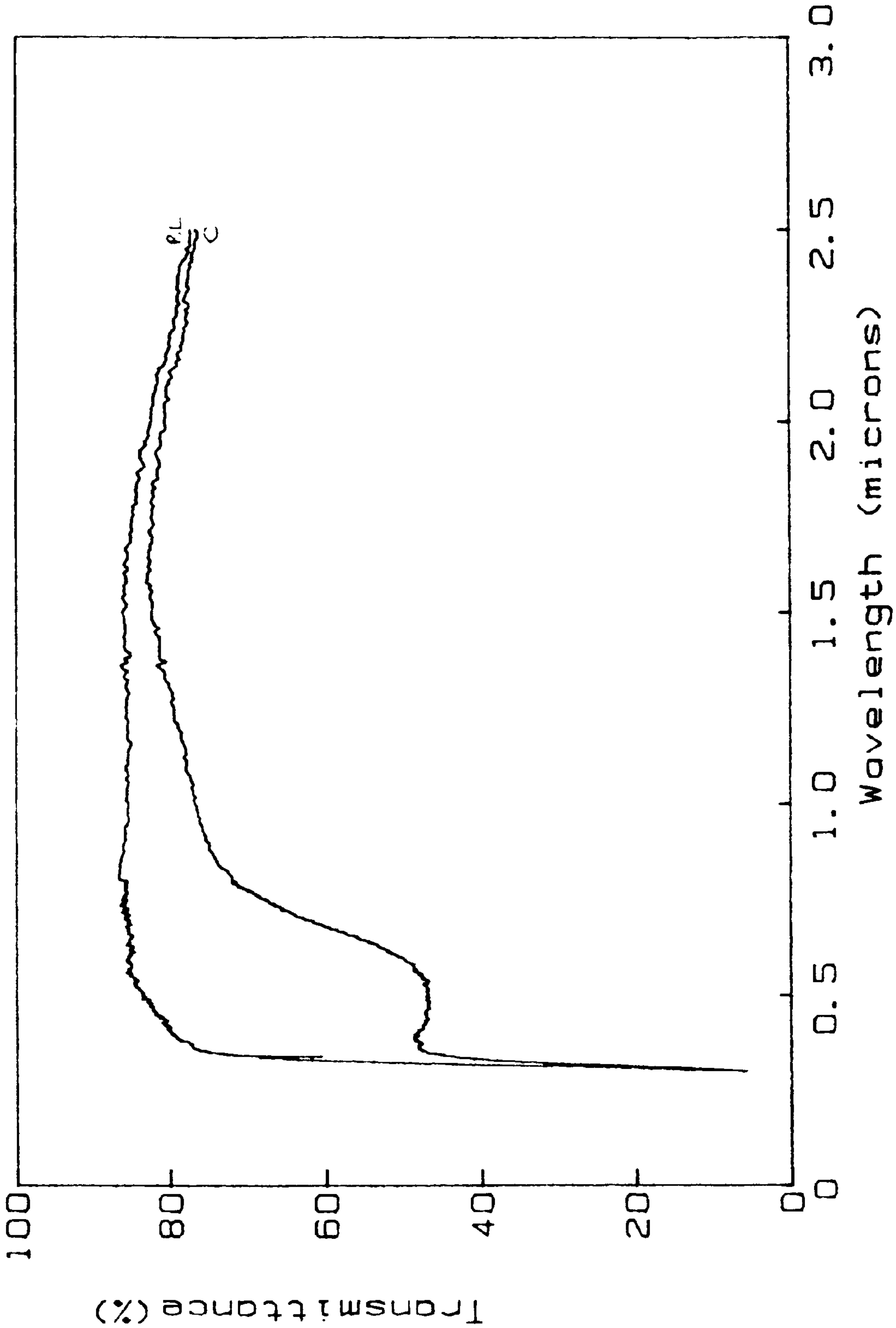
Transmittance (%)
100
80
60
40
20
0
Wavelength (microns)
0
0.5
1.0
1.5
2.0
2.5
3.0
RL
C

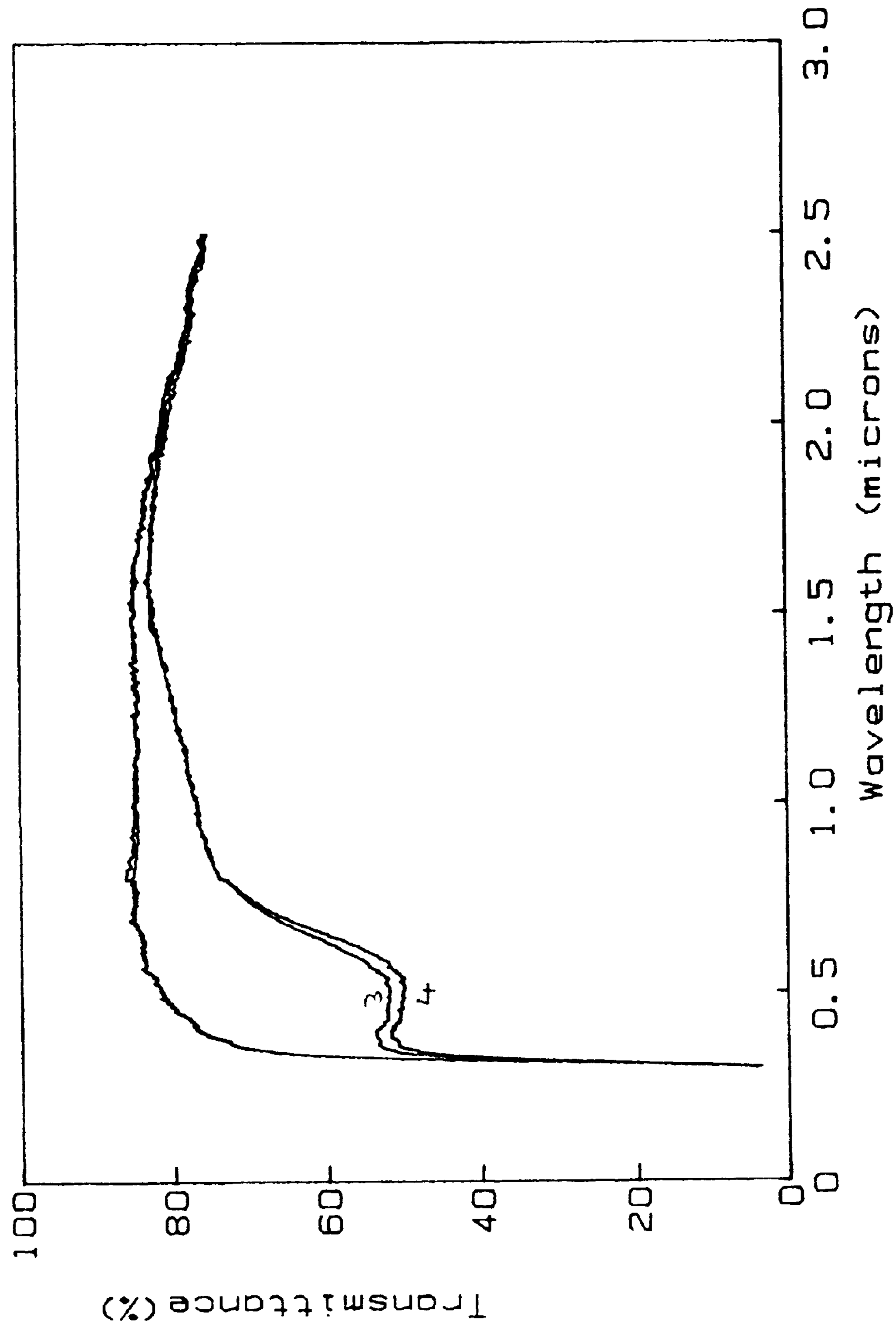

Transmittance (%)
0
20
40
60
80
100
Wavelength (microns)
0
0.5
1.0
1.5
2.0
2.5
3.0
3
4


Figs. 3 and 4

Fig. 5

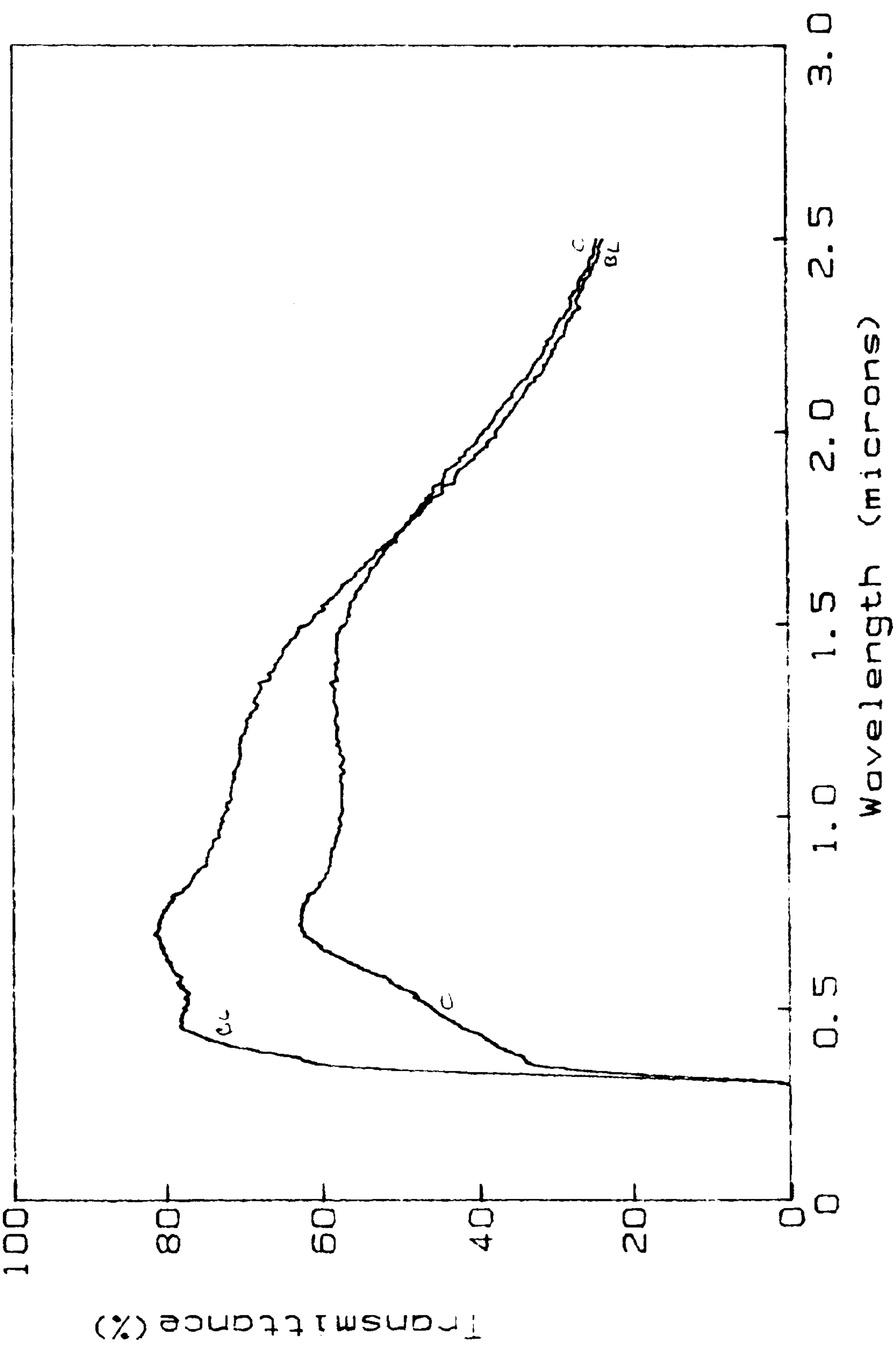
Transmittance (%)
0
20
40
60
80
100
Wavelength (microns)
0
0.5
1.0
1.5
2.0
2.5
3.0
BL
C